# EUROPÄISCHE PATENTANMELDUNG

(11) **EP 0 648 595 A2**
(43) Veröffentlichungstag der Anmeldung: **19.04.1995**
(21) Anmeldenummer: 94111794.7
(22) Anmeldetag: 28.07.1994
(51) Int. Cl.: B29D 31/00, B60J 10/04, B29C 59/00, B29C 67/00, D06C 9/00

(54) **Verfahren zur Herstellung eines beflockten Profiles mit verminderten Quietschgeräuschen**

(30) Priorität: 11.08.1993 DE 4326954
(71) Anmelder: METZELER Automotive Profiles GmbH, D-88131 Lindau (DE)
(72) Erfinder: Glagow, Klaus, D-88142 Wasserburg (DE); Kranz, Jürgen, D-88131 Lindau/Bodensee (DE)
(74) Vertreter: Seibert, Hannelore

(57) **Zusammenfassung**

Bei einem Verfahren zur Herstellung eines beflockten Profiles, insbesondere für Fenster und Schiebedächer in Kraftfahrzeugen, ist zur Vermeidung von Quietschgeräuschen erfindungsgemäß vorgesehen, daß die Beschnittkanten (6) der einzelnen Flockfasern (1) die senkrecht von der zugehörigen Profiloberfläche abragen, durch eine Wärmebehandlung abgerundet geschmolzen werden.

## Beschreibung

Die Erfindung bezieht sich auf ein Verfahren zur Herstellung eines beflockten Profiles, insbesondere für Fenster und Schiebedächer in Kraftfahrzeugen, mit verminderten Quietschgeräuschen.

Bei herkömmlich geflockten Profilen, bei denen die einzelnen Flockfasern senkrecht zur jeweiligen Profiloberfläche stehen, treten bei Verschiebung der benachbarten, abzudichtenden Flächen, wie Fenster oder Schiebedächer, unangenehme Quietschgeräusche auf. Diese Geräusche sind dadurch bedingt, daß die scharfen Beschnittkanten der einzelnen Flockfasern am Karosserielack oder an der Scheibe anliegen und bei Verschiebung in Vibration geraten.

Zur Vermeidung dieser Quietschgeräusche ist schon vorgesehen, die Profile mit einer Teflonbeschichtung zu versehen oder mit einem Textilgewebe zu beschichten, wie das beispielsweise in der DE 3731465 C1 oder der DE 3405973 A1 beschrieben ist. Derartige Beschichtungen sind jedoch unzureichend dauerhaft und können Schwierigkeiten bei der sicheren Abdichtung der Anlageflächen beinhalten.

Der vorliegenden Erfindung liegt daher die Aufgabe zugrunde, unter Beibehaltung einer herkömmlichen Beflockung diese so auszugestalten, daß bei Bewegung Quietschgeräusche weitgehend ausgeschlossen werden.

Zur Lösung dieser Aufgabe ist erfindungsgemäß vorgesehen, daß die Beschnittkanten der einzelnen Flockfasern durch eine Wärmebehandlung abgerundet geschmolzen werden.

Durch diese Abrundung der scharfen Beschnittkanten wird ein besseres Gleiten auf dem Lack gewährleistet, so daß damit Quietschgeräusche weitgehend ausgeschlossen sind.

Es ist aber auch möglich, daß die Beschnittkanten bei der Wärmebehandlung miteinander verschmolzen werden, so daß die Spitzen aller aufrechtstehender Flockfasern zu einer Einheit verschmolzen sind, ohne daß dadurch die Nachgiebigkeit und Flexibilität der Beflockung vermindert wird.

Anhand einer schematischen Zeichnung sind die wesentlichen Details der Erfindung und ihre Funktionsweise näher erläutert. Dabei zeigen:
- Fig. 1 und 2: eine herkömmliche Beflockung mit scharfen Beschnittkanten,
- Fig. 3 und 4: eine Beflockung mit abgerundeten Enden der einzelnen Flockfasern und
- Fig. 5 und 6: Flockfasern, die an ihren freien Enden miteinander verschmolzen sind.

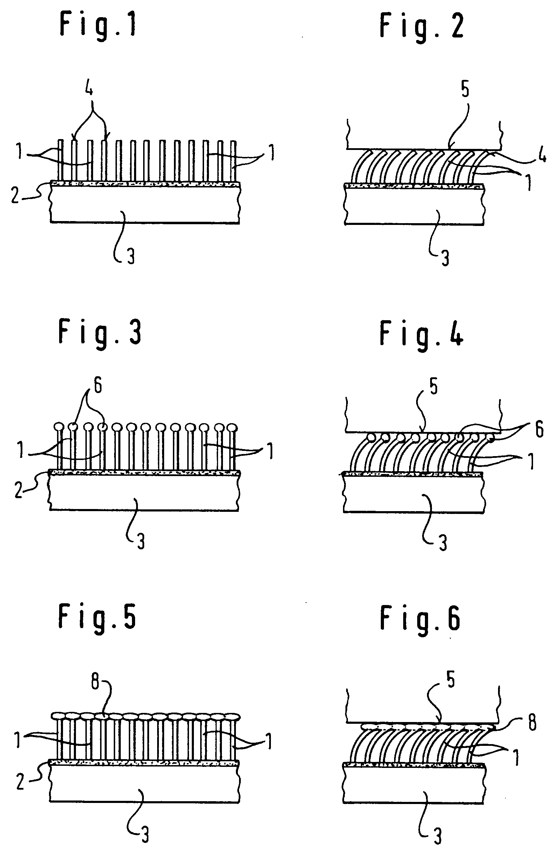

Wie man aus Figur 1 ersieht, sind die einzelnen Flockfasern 1 über eine Kleberschicht 2 auf einem Profil 3 aus Gummi oder Kunststoff verankert. Entsprechend den üblichen Herstellungsverfahren stehen dabei die einzelnen Flockfasern 1, die meist aus Polyester- oder Polyamid-Fasern hergestellt sind, senkrecht auf der Oberfläche des Profiles 3. Die Flockfasern 1 weisen dabei an ihren freien Enden relativ scharfkantige Beschnittkanten 4 auf, die bei einem Gleiten auf Lack- oder Glasflächen, wie das schematisch in Figur 2 mit dem Teil 5 angedeutet ist, zu Quietschgeräuschen neigen. Obwohl die Flockfasern 1 entsprechend Figur 2 seitlich abgebogen werden, kommen dennoch scharfe Kanten 4 mit der Gegenfläche 5 in Berührung und verursachen hier die unangenehmen Quietschgeräusche.

Eine Abhilfe hierfür ist in Figur 3 und 4 dargestellt. Danach werden die Spitzen der Flockfasern 1 einer Wärmebehandlung unterzogen, so daß die scharf beschnittenen Faserenden an den scharfen Kanten rund schmelzen, so daß sich abgerundete Enden 6 ergeben. Damit kommen gemäß Figur 4 nur noch diese glatten, abgerundeten Enden 6 mit der bewegten Gegenfläche 5 in Berührung. Wegen eines Fehlens scharfer Kanten und eines sanfteren Entlangschleifens werden jetzt auch keine Quietschgeräusche mehr auftreten.

Eine weitere Möglichkeit ist in den Figuren 5 und 6 gezeigt. Hierbei sind die Enden der Flockfasern 1 nicht nur rund geschmolzen, sondern durch verstärkte Wärmeeinwirkung auch noch mit benachbarten Faserenden verschmolzen. Somit ergibt sich eine aus der Schmelze entstandene zusammenhängende Schicht 8, die über die Einzelfasern 1 mit der Profiloberfläche 3 verbunden ist, und damit als Ganzes flexibel ist und seitlich ausweichen bzw. vertikal zusammengedrückt werden kann.

In Figur 6 ist die Anlage der Schicht 8 an der bewegten Gegenfläche 5 gezeigt, wobei auch hier wegen des Fehlens scharfer Kanten keine Quietschgeräusche mehr auftreten.

Somit ist also ein einfaches Verfahren aufgezeigt, mit dem Quietschgeräusche einer herkömmlichen Beflockung auf Profilen, die an bewegten Gegenflächen angrenzen, vermieden werden.

## Patentansprüche

1. Verfahren zur Herstellung eines beflockten Profiles, insbesondere für Fenster und Schiebedächer in Kraftfahrzeugen, mit verminderten Quietschgeräuschen, dadurch gekennzeichnet, daß die Beschnittkanten der einzelnen Flockfasern, die senkrecht von der zugehörigen Profiloberfläche abragen, durch eine Wärmebehandlung abgerundet geschmolzen werden.

2. Verfahren nach Anspruch 1, dadurch gekennzeichnet, daß die Beschnittkanten bei der Wärmebehandlung miteinander verschmolzen werden.
